# EUROPEAN PATENT APPLICATION

(11) **EP 2 523 477 A1**
(43) Date of publication of application: **14.11.2012**
(21) Application number: 10842216.3
(22) Date of filing: 24.12.2010
(51) Int. Cl.: H04W 4/06, H04L 12/56, H04W 8/04

(54) **MOBILITY MANAGEMENT DEVICE, MULTICAST SERVICE DELIVERY DEVICE, MOBILE COMMUNICATION SYSTEM, MOBILE STATION DEVICE, AND MOBILE COMMUNICATION METHOD**

(30) Priority: 08.01.2010 JP 2010003061
(71) Applicant: Sharp Kabushiki Kaisha, Osaka-shi, Osaka 545-8522 (JP)
(72) Inventor: MORIWAKI Tetsuro, Osaka 545-8522 (JP); ARAMOTO, Masafumi, Osaka 545-8522 (JP); NAOE, Hirokazu, Osaka 545-8522 (JP)
(74) Representative: Müller - Hoffmann & Partner
(86) International application number: PCT/JP2010/073344
(87) International publication number: WO 2011/083704

(57) **Abstract**

In a mobile communication system, in which a service area is constituted of a plurality of cells each disposing a base station, and which offers a multicast service to a mobile station apparatus existing in the service area, by transmitting multicast data from a multicast service delivering apparatus to the base stations in the service area, when a session initiation request received from the multicast service delivering apparatus includes a dynamic service area constitution identifier, a cell disposing a base station apparatus in which the mobile station apparatus exists is determined as a dynamic service area and a session start request is transmitted to the base station included in the service area. As a result, multicast data will be delivered limitedly to the base stations under which a mobile terminal exists, whereby it is possible to provide a mobile communication system and the like which can perform efficient communication without using waste resources.

## Description

### Technical Field

The present invention relates to a mobile communication system and the like.

### Background Art

In 3GPP, as a method of offering multicast services based on the EPS (Evolved Packet System), standardization of MBMS (Multimedia Broadcast/Multicast Service) has been in progress.

According to non-patent document 1, for example, an MBMS service area is defined as a range in which MBMS sessions are conducted. For example, the service area is set up in a regional unit such as the whole of Japan, the Kanto area, and the like, and the service area is constituted of a plurality of cells therein. Then, delivery paths of multicast data (which will be called multicast delivery paths hereinbelow) are configured in the interior of the EPC (Evolved Packet Core) that constitutes the EPS and the interior of a radio access network such as E-UTRAN, UTRAN or the like that is connected to the EPC. The base station (eNodeB in E-UTRAN) of each cell in the service area or the radio network control station (RNC in UTRAN) sets up a multicast radio bearer to terminals (UEs), to deliver multicast data. Here, the bearer is a logical transmission channel.

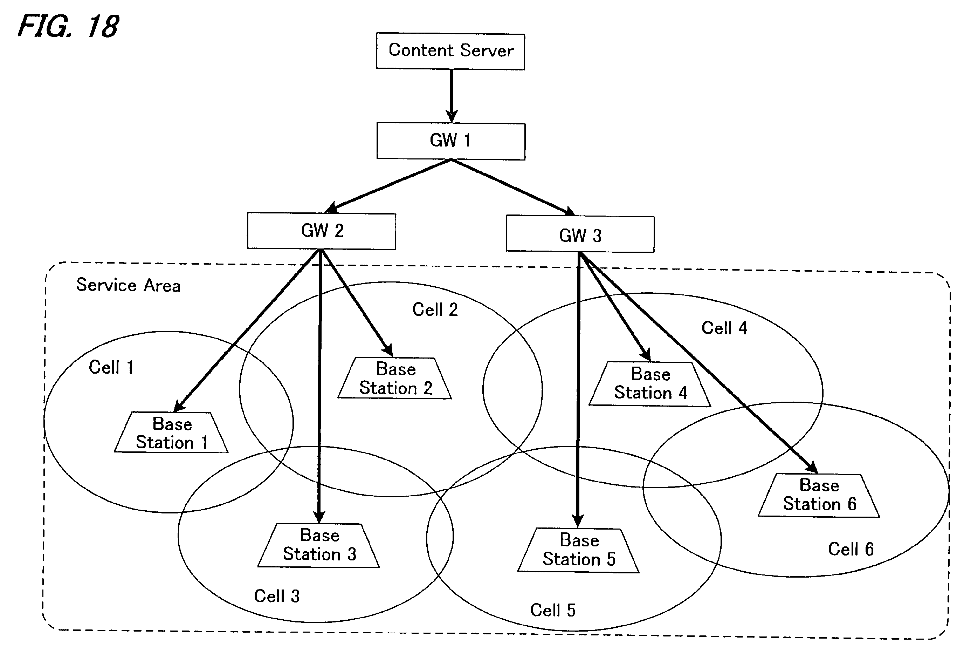

FIG. 18 shows a conceptual diagram a conventional multicast data distribution. The arrows show the flow of multicast data. Data transmitted from a content server is transmitted to GW2 and GW3 as lower nodes from a branch point GW1, then is further transmitted to base stations 1-6 for cells 1-6 inside the service area. At this time, multicast deliver paths are set up like a tree from the content server to the base stations via the GWs. Further, although not illustrated, terminals exist in cells 1-6 inside the service area and receive the multicast data.

This conventional multicast data delivery is implemented not by cell units but by service area (the MBMS service area defined in non-patent document 1) units. Accordingly, if there are a cell in which no terminal to be serviced exists inside the service area, the data is distributed to the base station of the cell with the start of delivery the multicast data. In the conventional multicast service having a comparatively large service area in a geographical point of view, the receiver terminals are distributed over a geographically wide range, so that the probability of cells in which no terminal exists among all the cells constituting the service area becomes relatively low. As a result, data distribution to the base stations of such cells has not caused a serious problem. However, it is expected in the future that multicast services aimed at only a narrow area increases as a new mode of multicast service.

As the example of multicast service aimed at only a narrow area, a use case of travel guide tour etc., is listed in non-patent document 2. Further, multicast services aimed at customers in a customer-attracting facility such as a sport event, concert hall, shopping center or the like, can also be considered. Moreover, a case of distributing information to only disaster victims in a disaster-stricken area may also be considered.

Furthermore, multicast services, not only to aim at human as user but also aim at objects (machines) (e.g., information distribution for maintenances of machines such in a factory etc. , and vending machines etc. densely disposed in a commercial facility, information distribution for public information display such as in a town, in the train, etc.,) may also be considered.

Differing from the prior art, data distribution in services of this kind is characterized in that the range of distribution is limited depending on the service to be offered and the related terminals are unevenly distributed geographically. Further, the place and time of the offered service is dynamically configured and hence cannot be determined in advance.

### Prior Art Documents

### Non-Patent Documents

Non-Patent Document 1: TS23.246, Technical Specification Group Services and Architecture; Multimedia Broadcast/Multicast Service (MBMS); Architecture and functional description
Non-Patent Document 2: 3GPP TR 22.947 (Technical Specification Group Services and System Aspects; Study on Personal Broadcast Service)

### Summary of the Invention

### Problems to be solved by the Invention

The above-described conventional mobile communication system is practiced on the assumption that the MBMS service area extends geographically widely. Hence, even if a new mode of multicast service (a multicast service aimed at users residing a geographically limited area) described as in non-patent document 2 is realized, multicast data is distributed to all the base stations that constitute the wide-ranging MBMS service area, that is, there is a possibility that the data is delivered to cells in which no receiving terminals to be serviced exist, causing the problem of waste resources being increased.

In order to avoid this, a narrow limited MBMS service area may be set up individually. However, in the conventional mobile communication system, the setup relating to the MBMS service area (e. g. , the list of base stations that constitutes the MBMS service area, and the like) needs to be statically set up beforehand inside the mobile communication system. Therefore, in the case of the aforementioned new mode of multicast service in which the place and time cannot be specified in advance, it was impossible to dynamically select cells in linkage with the existence status of terminals to be serviced at the start of service and constitute a service area.

Further, it is possible to solve, at least, the inefficiency problem of radio resources by stopping the base stations from distributing data to the cells in which no terminal exists. However, in the prior art, whether or not a base station sets up radio resources for data distribution is controlled at the radio access network level, so that any node inside the core network (EPC) does not take part in. Accordingly, a multicast delivery path is established to, at least, the base station, hence there is no way to solve the inefficiency of network resources.

In view of the above problems, it is an object of the present invention to provide a mobile communication system and the like which can perform efficient communication without using waste resources, by delivering multicast data to only the limited base stations under which mobile terminals exist. Means for Solving the Problems

In order to solve the above problem, a mobility management apparatus of the present invention is a mobility management apparatus for managing mobile station apparatuses, connected to a mobile communication system in which a service area is constituted of a plurality of cells each disposing a base station, and which offers a multicast service to a mobile station apparatus existing in the service area, by transmitting multicast data from a multicast service delivering apparatus to the base stations in the service area, and comprises:
a terminal management means that manages the mobile station apparatus in association with a base station apparatus under which the mobile station apparatus exists;
a start request receiving means that receives a session initiation request for multicast, from the multicast service delivering apparatus,
a service area determining means which, when the session initiation request includes a dynamic service area constitution identifier, determines, based on the terminal management means, a cell disposing a base station apparatus under which the mobile station apparatus exists, as a dynamic service area; and
a first session start request transmitting means which transmits a session start request to the base station apparatus included in the service area determined by the service area determining means.

A mobility management apparatus of the present invention further comprises:
a join request receiving means that receives a join request to a multicast group, from the mobile station apparatus, wherein
the terminal management means manages an identifier of the multicast group, the mobile station apparatus and the base station apparatus under which the mobile station apparatus exists, in an associated manner; and
the service area determining means, when the session initiation request includes the dynamic service area constitution identifier, determines, based on the terminal management means, the cell in which the base station apparatus associated with the multicast group corresponding to the session initiation request is disposed, as the dynamic service area.

The mobility management apparatus of the present invention is characterized in that a base station control apparatus for managing the base station apparatus and performing control between base station apparatuses is further connected to the mobile communication system, and,
the first session start request transmitting means transmits a session start request to the base station control apparatus that manages the base station apparatus included in the service area that is determined by the service area determining means, by including information on the base station apparatus in the session start request.

A multicast service delivering apparatus of the present invention is a multicast service delivering apparatus connected to a mobile communication system, in which a service area is constituted of a plurality of cells each disposing a base station, and which offers a multicast service to a mobile station apparatus existing in the service area, by transmitting multicast data from a multicast service delivering apparatus to the base stations in the service area, comprises:
a second session start request transmitting means which, at initiation of a multicast session, transmits a session start request to a mobility management apparatus connected to manage the mobile station apparatus, wherein
the second session start request transmitting means includes a dynamic service area constitution identifier in the session start request when the mobility management apparatus is wanted to cause a base station apparatus disposed in a cell in which the mobile station exists, to dynamically constitute a service area.

Amobile communication systemof the present invention is a mobile communication system, in which a service area is constituted of a plurality of cells each disposing a base station, and which offers a multicast service to a mobile station apparatus existing in the service area, by transmitting multicast data from a multicast service delivering apparatus to the base stations in the service area, wherein
a cell disposing a base station under which the mobile station apparatus exists is made to dynamically form a service area.

The mobile communication system of the present invention further including a mobility management apparatus managing mobile station apparatuses, and is characterized in that
the mobility management apparatus manages the mobile station apparatus and the base station apparatus under which the mobile station apparatus exists, and selects the base station apparatus under which the mobile station apparatus exists and sets up a communication path to the base station apparatus when receiving an indication to dynamically constitute a service area, from the multicast service delivering apparatus.

Amobile communication system of the present invention is a mobile communication system, in which a service area is constituted of a plurality of cells each disposing a base station, and which offers a multicast service to a mobile station apparatus existing in the service area, by transmitting multicast data from a multicast service delivering apparatus to the base stations in the service area and is connected to a mobility management apparatus connected to manage the mobile station apparatus, wherein
the mobility management apparatus includes:
a terminal management means that manages the mobile station apparatus in association with a base station apparatus under which the mobile station apparatus exists;
an initiation request receiving means that receives a session initiation request for multicast, from the multicast service delivering apparatus;
a service area determining means which, when the session initiation request includes a dynamic service area constitution identifier, determines, based on the terminal management means, the cell disposing a base station apparatus under which the mobile station apparatus exists, as a dynamic service area; and
a first session start request transmitting means which transmits a session start request to the base station apparatuses included in the service area determined by the service area determining means.

A mobile station apparatus of the present invention is a mobile station apparatus connected to a mobile communication system described above, and comprises:
a multicast bearer setup means that sets up a multicast bearer with the base station apparatus; and
a multicast data receiving means that receives multicast data from the multicast service delivering apparatus, through the multicast bearer.

Amobile communication method of the present invention is a mobile communication method in a mobile communication system, in which a service area is constituted of a plurality of cells each disposing a base station, and which offers multicast services to a mobile station apparatus existing in the service area, by transmitting multicast data from a multicast service delivering apparatus to the base stations in the service area, wherein
a cell disposing a base station in which the mobile station apparatus exists constitutes a service area dynamically.

A mobile communication method of the present invention is a mobile communication method in a mobile communication system, in which a service area is constituted of a plurality of cells each disposing a base station, and which offers multicast services to a mobile station apparatus existing in the service area, by transmitting multicast data from a multicast service delivering apparatus to the base stations in the service area, and comprises:
a step of managing the mobile station apparatus in association with a base station apparatus under which the mobile station apparatus exists;
a step of receiving a session start request for multicast, from the multicast service delivering apparatus;
a step of determining, based on the terminal management means, a cell disposing a base station apparatus under which the mobile station apparatus exists, as a dynamic service area when the session start request includes a dynamic service area constitution identifier; and
a step of transmitting a session start request to the base station apparatuses included in the service area determined.

### Advantages of the Invention

Thus, the mobility management apparatus does not select the destination cell of conventional multicast data, but sets up multicast delivery paths to all the base station apparatuses which the mobility management apparatus manages in the mobile communication system. However, in the present invention, the mobility management apparatus dynamically selects the delivery designation base station apparatuses depending on the cell in which a mobile station apparatus exists, hence the selected base station apparatuses alone participate in the delivery paths so that it is not necessary to set up waste delivery paths, thus improving efficiency of network resources and radio resources.

Similarly, conventionally it was necessary to transmit a session start request to all the base station apparatuses which the mobility management apparatus manages in the mobile communication system. However, according to the present invention, it is not necessary to distribute the session start request message to all the base station apparatuses, it is hence possible to suppress signaling traffic to a low level.

Further, the conventional information notified from a mobile station apparatus in the attach or location register phase and in the multicast group join phase may be used as the information on the mobile station apparatus which the multicast service delivering apparatus and the mobility management apparatus of the present invention manage, it is hence possible to offer multicast services without adding extra processing loads for notifying new information to the mobile station apparatus and other reasons.

### Brief Description of the Drawings

[FIG. 1] is a diagram showing an entire mobile communication system in the first embodiment.
[FIG. 2] is a diagram for illustrating the functional configuration of a BM-SC in the first embodiment.
[FIG. 3] is a diagram for illustrating the functional configuration of an MME in the first embodiment.
[FIG. 4] is a diagram showing one example of a data configuration of location management information in the first embodiment.
[FIG. 5] is a diagram for illustrating one example of received data in the first embodiment.
[FIG. 6] is a diagram showing one example of a data configuration of UE management information in the first embodiment.
[FIG. 7] is an operational flow for illustrating the process at an MME in the first embodiment.
[FIG. 8] is a sequence diagram for illustrating the processing in an entire mobile communication system in the first embodiment.
[FIG. 9] is a sequence diagram for illustrating the processing in an entire mobile communication system in the first embodiment.
[FIG. 10] is a sequence diagram for illustrating the processing in an entire mobile communication system in the first embodiment.
[FIG. 11] is a diagram showing an entire mobile communication system in the second embodiment.
[FIG. 12] is an operational flow for illustrating the process at an MME in the second embodiment.
[FIG. 13] is a sequence diagram for illustrating the processing in an entire mobile communication system in the second embodiment.
[FIG. 14] is a diagram showing an entire mobile communication system in the third embodiment.
[FIG. 15] is an operational flow for illustrating the process at an MME in the third embodiment.
[FIG. 16] is a sequence diagram for illustrating the processing in an entire mobile communication system in the third embodiment.
[FIG. 17] is a diagram showing one example of a data configuration of UE management information in a variational example.
[FIG. 18] is a diagram for illustrating a conventional mobile communication system.

### Mode for Carrying Out the Invention

Now, embodiments of mobile communication systems to which the present invention is applied will be described with reference to the drawings. In the description hereinbelow, detailed description on the equipment known in the above-described background art and the like is omitted, and the components characterizing the present invention will be mainly described.

### [1. The First Embodiment]

To begin with, the first embodiment will be described.

### [1.1 System Configuration]

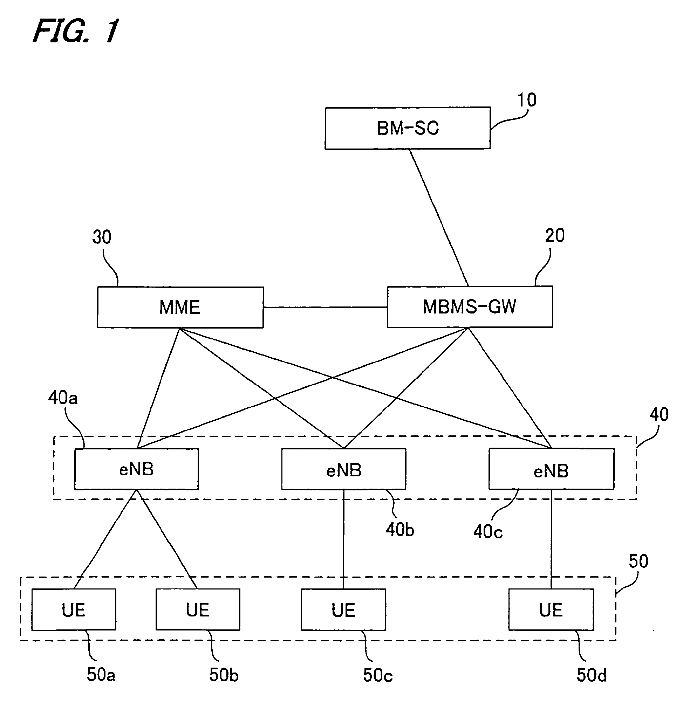

FIG. 1 is a diagram for illustrating a system configuration of a mobile communication system 1 to which the present invention in the first embodiment is applied, including a BM-SC 10 (Broadcast-Multicast Service Center), an MBMS-GW 20, a core network including an MME 30, a radio access network including eNBs 40 (eNB 40a, eNB 40b, eNB 40c) and UEs 50 (UE 50a, UE 50b, UE 50c, UE 50d).

BM-SC 10 is an apparatus (multicast service delivering apparatus) for controlling distribution of multicast services, and is connected to MBMS-GW 20 as an edge node in the core network. MBMS-GW 20 is connected to eNBs 40 and MME 30 that performs control relating multicast bearer setup and the like of eNBs 40. MME 30 is also connected to eNBs 40.

Here, MME 30 is a mobility management apparatus for managing mobile stations and performs, for example location management, handover control and the like. On the other hand, eNBs 40 are base stations (apparatus), and include eNB 40a, eNB 40b and eNB 40c in FIG. 1. Under eNBs 40, user terminals, i.e., UEs 50 are connected as mobile station (terminal) apparatuses. In FIG. 1, UE 50a and UE 50b are connected to eNB 40a, UE 50c to eNB 40b, UE 50d to eNB 40c, respectively.

### [1.2 Functional Configuration]

Next, the functional configuration of each apparatus will be described. Here, the configurations of BM-SC 10 and MME 30 will be outlined while detailed description of individual nodes is omitted since the details are defined in the aforementioned non-patent document 1.

### [1.2.1 BM-SC Configuration]

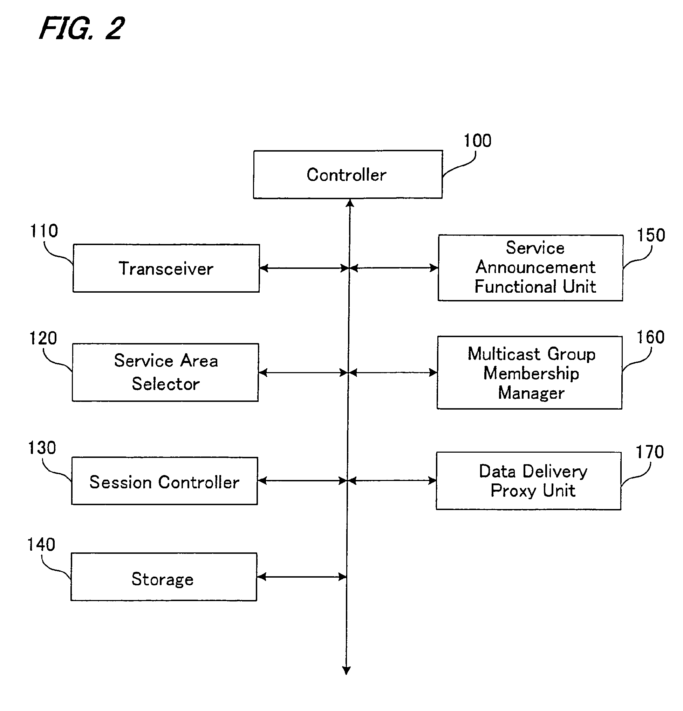

As shown in FIG. 2, BM-SC 10 includes a controller 100 to which a transceiver 110, a service area selector 120, a session controller 130, a storage 140, a service announcement functional unit 150, a multicast group membership manager 160 and a data delivery proxy unit 170 are connected via a bus.

Controller 100 is a functional unit that controls the operation of BM-SC 10, and is constituted of a CPU etc., for example. Controller 100 realizes diverse functions by reading and executing different kinds of programs stored in storage 140.

Transceiver 110 is a functional unit for transmitting and receiving data from another node or a terminal, and is a functional unit for controlling communication. Controller 100 forwards data received through transceiver 110 to individual functional units, and transmits data sent from each functional unit to another node or a terminal via transceiver 110.

Service area selector 120 is a functional unit that holds information on previously fixed, one or a plurality of MBMS service areas and selects which MBMS service area or areas data should be delivered to at the time of starting a multicast session to make lower nodes identify the MBMS service areas by means of service area identifiers (SAI).

Concerning the MBMS service areas to which data is distributed, it is possible for the content provider to designate the areas and the like, to which the current provider desires to distribute the data, to service area selector 120. For example, if the content provider designates that distribution should cover the whole coverage of the networks offered by the mobile communication operator, service area selector 120 selects SAI-0 (indicating the whole network) and notifies it to lower nodes.

SAI is interpreted as an identifier that shows a set of cells in eNB 40 or the like of the radio access network, and used to identify which cell belong to the MBMS service area. Further, in the present embodiment, when multicast destination cells are wanted to be dynamically selected, or when the service area is wanted to be dynamically constituted, BM-SC 10 gives its indication while lower nodes are prepared with a means for detecting the indication so that service area selector 120 is adapted to be able to select. Here, the service area that is configured by dynamically selecting multicast destination cells is called "dynamic service area" for the sake of convenience, in terms of making it distinct from the fixed MBMS service area.

As the measure for this, another identifier (which will be referred to hereinbelow as a "dynamic service area constitution identifier") different from the SAI that indicates the fixed MBMS service area, may be used or, it is also possible to configure a certain SAI itself as a special SAI that involves an indication based on which lower nodes determine the constitution of a dynamic service area (meaning that, for example, SAI-0 indicates the whole area the network covers, whereas SAI-n indicates that a dynamic service area is constituted).

It is also possible to configure lower nodes interpret that the lower nodes constitutes a dynamic service area, by letting service area selector 120 not designate any SAI on purpose to the lower nodes. In either way, a constitution of a dynamic service area is instructed using one of those methods, by service area selector 120.

Also, BM-SC 10 manages attribute information (start time, end time, genre, etc.) on contents in association with IPmulticast addresses, andsimilarlyalsomanages information on whether a dynamic service area or the MBMS service area is used, in association with IP multicast addresses. Determination on which service area BM-SC 10 selects may be made based on the information acquired from the content provider before start of a multicast service session (which will be referred to hereinbelow as multicast session), or based on the attribute information on the content.

Session controller 130 is a functional unit for controlling multicast sessions. Session controller 130 assigns an identifier (TMGI: Temporary Mobile Group Identity) unique to each multicast group of a plurality of UEs 50 that participate in a certain single multicast session.

Storage 140 is a functional unit for storing various kinds of programs, data, etc. , necessary for BM-SC 10 to operate. Controller 100 and other functional units read the programs and data from storage 140 as required to execute individual functions. Here, storage 140 is constituted of a storage device including, for example semiconductor memory such as EEPROM, DRAM and/or a magnetic disk such as HDD and the like.

Service announcement functional unit 150 is a functional unit for announcing information on services (start time, end time, explanation on content, etc.) to UEs 50 of users.

Multicast group membership manager 160 is a functional unit for permitting UEs 50 that wants to receive, to join the multicast group and managing the UEs as a multicast group. Data delivery proxy unit 170 is a functional unit that is used when data is distributed to lower nodes.

### [1.2.2 MME Configuration]

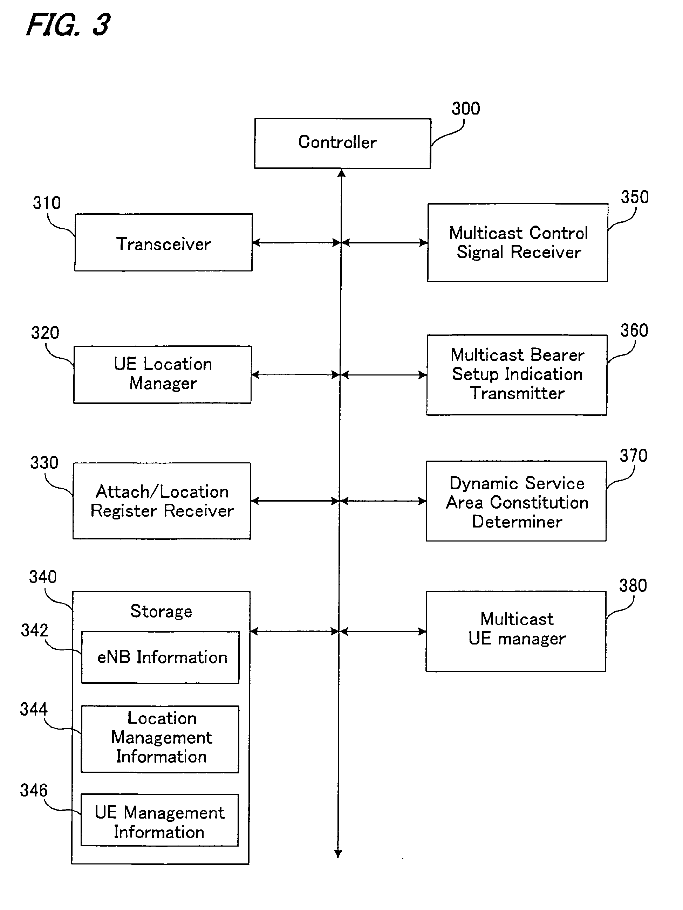

Subsequently, the configuration of MME 30 will be described with reference to FIG. 3. MME 30 includes a controller 300 to which a transceiver 310, a UE location manager 320, an attach/location register receiver 330, a storage 340, a multicast control signal receiver 350, a multicast bearer setup indication transmitter 360, a dynamic service area constitution determiner 370 and a multicast UE manager 380 are connected.

Controller 300 is a functional unit that controls the action of MME 30, and is constituted of a CPU etc., for example. Controller 300 realizes diverse functions by reading and executing different kinds of programs stored in storage 340.

Transceiver 310 is a functional unit for transmitting and receiving data from another node or a terminal, and a functional unit for controlling communication. Controller 300 forwards data received through transceiver 310 to individual functional units, and transmits data sent from each functional unit to another node or a terminal via transceiver 310.

UE location manager 320 is a functional unit that stores the identifier of a UE 50 that exists within the cell and has attached or position registered, into an aftermentioned location management information 344 in association with the cell identifier. Attach/location register receiver 330 is a functional unit receiving an attach or location register control signal from UE 50.

Storage 340 is a functional unit for storing various kinds of programs, data, etc. , necessary for MME 30 to operate. Controller 300 and other functional units read the programs and data from storage 340 as required and execute processes to realize individual functions. Here, storage 340 is constituted of a storage device including, for example semiconductor memories such as EEPROM, DRAM and/or a magnetic disk such as HDD and the like.

Storage 340 stores eNB information 342, location management information 344 and UEmanagement information 346.

The eNB information 342 is information on the identifiers and/or addresses of eNBs 40 that connect to the MME and the identifier of the cell each eNB 40 covers.

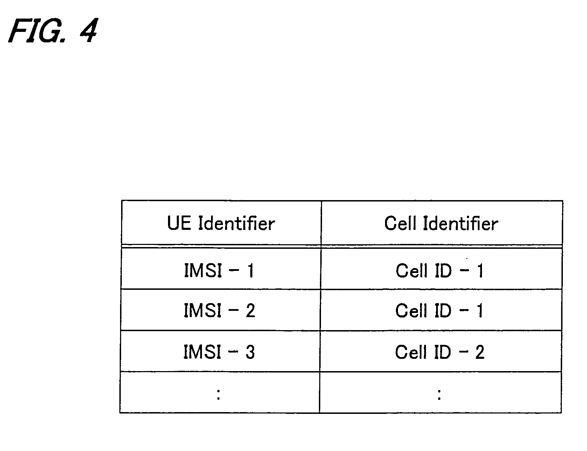

Location management information 344 is information for managing locations of UEs 50 by UE location manager 320. When a UE 50 exists in the cell, the UE transmits an attach signal or location register signal to MME 30, at that time, sends the identifier of UE 50, namely, IMSI (International Mobile Subscriber Identity) and the cell identifier (Cell ID) of the cell in which UE 50 exists, by including these identifiers to the location register signal, to MME 30. The location management information is information including this UE identifier (e.g., "IMSI-1") in association with the cell identifier (e.g., "Cell ID-1"). One example of data configuration in this case is shown in FIG. 4.

In the example of FIG. 4, information on UE 50a is configured so that UE 50a has an identifier of "IMSI-1" and exists in a cell identified as "Cell ID-1". Similarly, information on UE 50b (IMSI-2) having attached or location registered is configured so that it exists in the same cell "Cell ID-1" as UE 50a. Information on UE 50c (IMSI-3) is configured so that it exists in a cell "Cell ID-2".

This location management information 344 stored based on attachment or position registration is information that is constantly updated when UEs 50 exist in cells, not limited to the case where multicast is implemented.

UE management information 346 is information managed by a multicast UE manager 380. Details will be described later.

As the controller relating to the multicast services of MME 30, multicast control signal receiver 350 and multicast bearer setup indication transmitter 360 are provided.

Multicast control signal receiver 350 is a functional unit which, when receiving a control signal relating to multicast bearer setup from MBMS-GW 20 as a superior node, inquires of the storage the identifiers, addresses, etc., of eNBs 40 under management of MME 30.

Multicast bearer setup indication transmitter 360 is a functional unit for indicating setup or release of multicast bearers for eNBs 40 based on the identifiers and/or addresses of eNBs 40.

Dynamic service area constitution determiner 370 is a functional unit for determining whether to constitute a dynamic service area for a certain multicast session, instead of setting up delivery paths to the fixed MBMS service area.

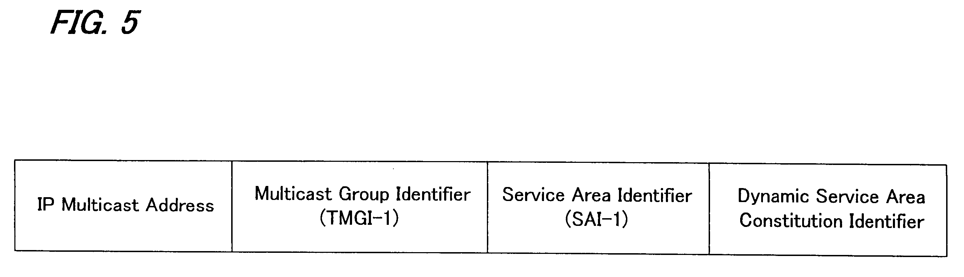

FIG. 5 shows information included in a session start request message which MME 30 receives from a superior node when a certain multicast session starts. The session start request message usually has message fields including an IP multicast address, a multicast group identifier TMGI and a service area identifier SAI.

SAI is an identifier that indicates the conventional fixed service area and is included to identify eNBs 40 included in the MBMS service area in the radio access network level. Additionally, inclusion of a dynamic service area constitution identifier other than this, to a message makes it possible for MME 30 to determine whether a dynamic service area should be constituted.

The dynamic service area constitution identifier is added to the message field when BM-SC 10 transmits a session start request message. As the other method for enabling MME 30 to determine the constitution of a dynamic service area than the above method of adding a dynamic service area identifier (designator), a special SAI that implies the constitution of a dynamic service area, may be designated as a kind of conventional service area identifier SAI, as already mentioned.

For example, if it is determined that a dynamic service area is constituted when the service area identifier is SAI-n, the content of the message field in the service area identifier is given with SAI-n.

Further, as still another method, when the constitution of a dynamic service area is determined by non-inclusion of any SAI in the session start request message, BM-SC 10 transmits the message with the service area identifier field blanked.

Multicast UE manager 380 is a functional unit that manages and update UEs 50 joining the multicast group, based on multicast group join request messages from UEs 50.

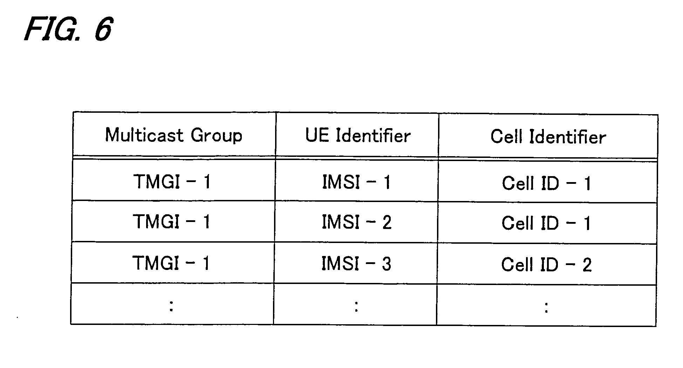

Here, the UE management information (correspondence table) managed at multicast UE manager 380 will be described taking an example shown in FIG. 6. A multicast group is identified by a TMGI at each node. Therefore, when in multicast UE manager 380, UE 50a joins a multicast group, for example, named "TMGI-1", UE management information 346 that relates the identifier of UE 50a, namely "IMSI-1" to "TMGI-1" is stored in multicast UE manager 380.

Further, the identifier "Cell ID-1" of the cell in which UE 50a exists is further related to UE management information 346 and the information is stored in multicast UE manager 380. Also for UE 50b and UE 50c joining "TMGI-1", respective IMSIs and Cell IDs are related and given in UE management information 346. Here, UE management information 346 is information for implementing the multicast distribution method of the present embodiment, and is stored by multicast UE manager 380 at the phase when UE 50 makes a request for joining a multicast group, separately from the aforementioned location management information 344.

Here, information on UE 50 to be managed in each of the aforementioned BM-SC 10 and MME 30 is notified from UE 50 to BM-SC 10 and MME 30 in the attach or location register phase and in the phase when the UE joins the multicast group and can be managed as in the past, so that there is no need to make functional changes in UE 50 from the conventional configuration.

### [1.3 Processing Flow]

Subsequently, the processing flow in the present embodiment will be described.

### [1.3.1 MME Processing Flow]

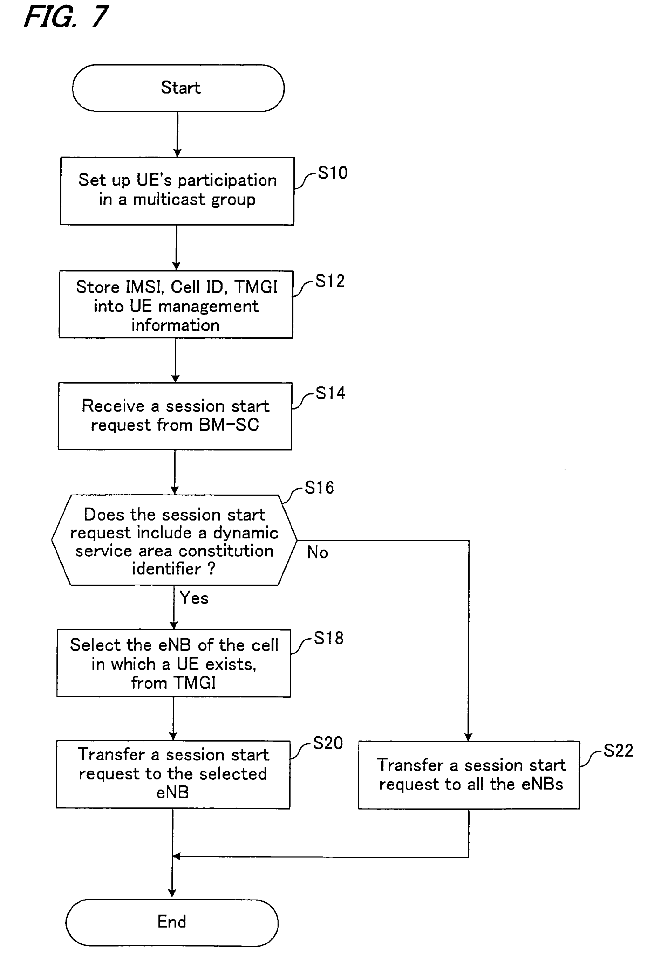

Referring first to FIG. 7, the processing flow (operation) of MME 30 in the present embodiment will be described. Herein, description will be given by assuming that determination of MME 30 on a dynamic service area is made using dynamic service area constitution identifiers.

Initially, when UE 50's participation in a multicast group is set up (Step S10), UE management information 346 that relates the identifier IMSI of UE 50, the identifier Cell ID of the cell in which the UE exists and the identifier TMGI of the multicast group is stored in (Step S12). Herein, if there is another UE 50 that requests for participation in the multicast group, Step S12 is implemented in the same manner.

At the stage of starting a multicast session, MME 30 (controller 300) receives a session start request message transmitted from BM-SC 10 (Step S14). This session start request message includes TMGI.

Then, it is determined whether a dynamic service area is constituted by checking whether or not the session start request message includes a dynamic service area constitution identifier (Step S16). If it is included, the constitution of a dynamic service area is determined, and the Cell ID of the cell in which UE 50 exists, related to the TMGI of the multicast group, is read out from UE management information 346 to select the eNB 40 that covers the cell (Step S16; Yes -> Step S18). Then, a session start request message is transmitted to the selected eNB 40 (Step S20).

On the other hand, when no dynamic service area constitution identifier is included in the session start request message at Step S16, it is determined that no dynamic service area is constituted, and a session start request message is transmitted to all eNBs 40 under the umbrella of MME 30, to activate multicast for covering the conventional fixed MBMS service area (Step S16; No -> Step S22).

In the above way, since in the processing from Step S18 afterwards the session start request message is transmitted only to the eNB 40 that is selected by MME 30, only the eNB 40 of the cell in which UE 50 exists implements an IP multicast join process (a process of joining the multicast trees). As a result, the necessary eNB 40 alone participates in the multicast delivery paths. That is, a dynamic service area is constituted.

On the other hand, when no dynamic service area constitution identifier is included at Step S16 and it is hence determined that no dynamic service area will be constituted, all the eNBs 40 that constitute the MBMS service area under the umbrella of MME 30 participate in the delivery paths in accordance with the MBMS service area that has been statically defined in advance no matter whether UE 50 exists or not.

### [1.3.2 Flow of the Entire System]

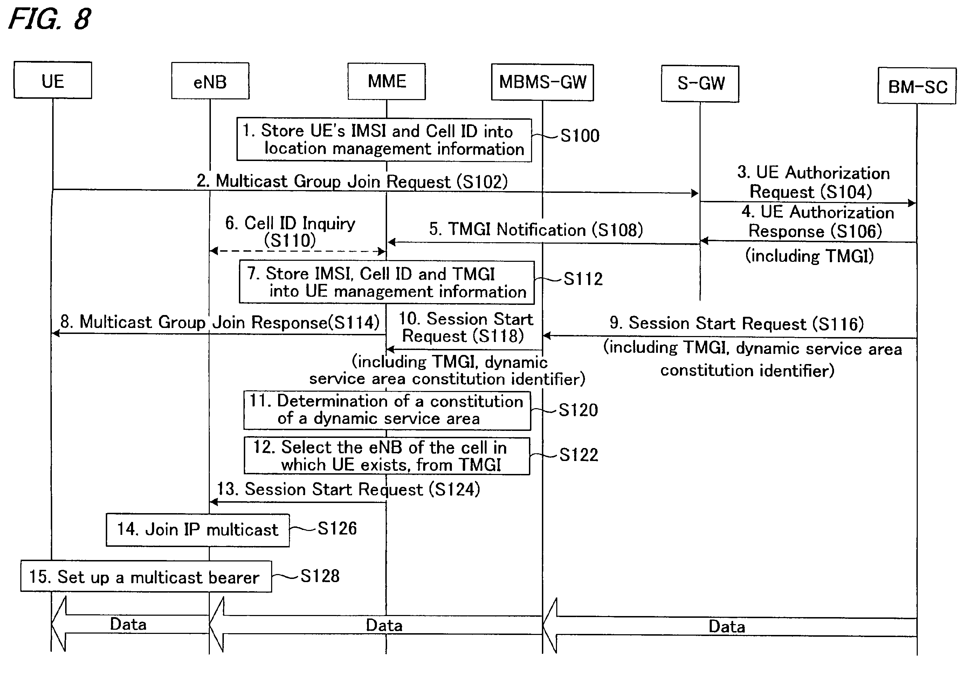

Next, the flow of the entire mobile communication system in the present embodiment will be described with reference to FIG. 8. FIG. 8 is a diagram illustrating an operational example of the entire mobile communication system of the present embodiment, in which each arrow indicates the flow of necessary information between nodes, and a corner-rounded rectangle shows a process inside a node.

Based on previous attachment or location registration from a UE 50, MME 30 stores the IMSI of UE 50 and the Cell ID of the cell in which the UE exists in location management information 344 (S100). At this stage, a default bearer is set up between UE 50 and S-GW (Serving GW), and MME 30 stores the bearer ID of the default bearer. The bearer ID is an ID that is unique to each UE 50 for which a default bearer is set up, and MME 30 can identify the address of the UE 50 defining the end of the bearer. Further, the S-GW is a node that is disposed in the core network and is set up as the default router for UE 50. Though this S-GW is not illustrated on the system configuration in FIG. 1 since it may be functionally integrated with MBMS-GW 20, herein the S-GW and MBMS-GW 20 are intentionally shown separately in order to make the operation of the S-GW as the default router and the operation of MBMS-GW 20 distinct from one another.

### [1.3.2.1 Multicast Group Joining Process]

Subsequently, S102 to S114 are the operation of UE 50 to join the multicast group of a certain multicast service. Based on the previous service announcement, UE 50 has already acquired the IP multicast address of the multicast service which UE 50 want to receive, and by designating it, UE 50 transmits a multicast group join request to the S-GW with which a default bearer has been set up (S102).

Then, the S-GW transmits a UE authorization request to BM-SC 10 (S104). When authorizing UE 50, BM-SC 10 notifies the S-GW of the identifier TMGI of the multicast group the UE joins, by including the identifier in a UE authorization response (S106).

Thereafter, the S-GWnotifies MME 30 of the TMGI (S108). MME 30 stores UE management information 346 of the TMGI, the IMSI of UE 50, the Cell ID of the cell in which the UE exists (S112).

Incidentally, there are some methods of identifying the IMSI of UE 50 that has joined the multicast group, other than the IMSI of UE 50 which MME 30 stored as location management information 344 at S100. For example, IMSI may be directly notified from UE 50 at S102 and then, the IMSI may be notified to MME 30 at S106 and S108. Also, when, from a security viewpoint, IMSI is not noticed directly from UE 50, but is noticed from UE 50 in a TMSI (Temporary Mobile Subscriber Identity: an identifier which MME temporarily assigns to a UE for location management) format or the like, it is possible at the nodes on the core network such as BM-SC 10, S-GW, MME 30, etc. to identify the IMSI.

MME 30 can also identify the IMSI when the aforementioned bearer ID is notified from the S-GW to MME 30 at S108. In the present embodiment, the method should not be limited to any of the above, and is not particularly limited as long as MME 30 can identify the IMSI at Step S112. Since the IMSI can be identified by any of these methods, it is also possible for MME 30 to identify the Cell ID from location management information 344 that has been managed beforehand.

Here, the Cell ID which MME 30 manages in UE management information 346 based on location management information 344 is the identifier of the cell to which UE 50 has attached or location registered most recently, but MME 30 may have an additional step of updating the Cell ID by inquiring of the eNB of the cell whether UE 50 exists or not within the cell (S110). In this case, MME 30 may either make an inquiry to eNB 40 of the cell alone, or may make inquiries to all the eNBs of the cells located in the range of the tracking area which MME 30 manages in order to perform paging to UE 50, not limited for multicast services.

MME 30 transmits a multicast group join response to UE 50 (S114). Transmission to UE 50 is performed based on the bearer ID of the default bearer.

Now, when second or third UE 50 joins the same multicast group, the same operation from S102 to S114 will be implemented for the second and third UEs 50.
It is also possible for UE 50 to join the multicast group after the initiation of a multicast session described below.

### [1.3.2.2 Multicast Session Initiating Process]

The following S116 to S128 are the operation when a multicast session is started. BM-SC 10 transmits a session start request including the TMGI and a dynamic service area constitution identifier to MBMS-GW 20 (S116).

MBMS-GW 20 transmits a session start request to MME 30 (S118). MME 30 reads out the dynamic service area constitution identifier from the session start request and determines that a dynamic service area should be constituted (S120). Then, based on UE management information 346 stored at S112, the MME reads out the Cell ID associated with the TMGI, identifies and selects eNB 40 of the cell (S122).

Then, MME 30 transmits a session start request to the selected eNB 40 (S124). In this occasion, it is preferable to make the session start request message include information indicating that the multicast service is constituted as a dynamic service area.

The eNB 40 that has received the session start request implements an IP multicast join process (S126). Then, eNB 40 performs a multicast bearer setup process with between UE 50 to establish a multicast bearer with between UE 50 (S128). When data is transmitted from BM-SC 10, the data reaches UE 50 via MBMS-GW 20 and eNB 40.

Here, when it is found at S120 that no dynamic service area constitution identifier is included in the session start request, MME 30 transmits a session start request to all of the lower eNBs 40 so that each eNB 40 implements an IP multicast join process, in the same manner as in the past. The operation of each eNB 40 is the same as that at S124, S126 and S128 described above.

Though the description heretofore has been described taking an example where MME 30 identifies the cell in which UE 50 exists, based on TMGI, it is also possible to identify the Cell ID of the cell in which UE 50 exists, not only from TMGI but also from IMSI because UE management information 346 stored by MME 30 of the present embodiment is information that associates TMGI, IMSI and Cell ID. Specifically, when the IMSI of UE 50 that joins the multicast group is transmitted together with the session start request transmitted at S116 by BM-SC 10, MME 30 will identify the Cell ID by referring to UE management information 346 based on this IMSI at S120.

Further, though not illustrated, BM-SC 10 also transmits a MBMS service area identifier (SAI) in addition to the dynamic service area constitution identifier, together with the session start request at S116. As described above, other than the method of using a dynamic service area constitution identifier, MME 30 can also determine that a service area is constituted dynamically, based on the method of defining a special SAI for the SAI itself, the method that SAI is not included in the session start request message, or the like.

### [1. 3. 3 Flow of the Entire System (MBMS Specifications)

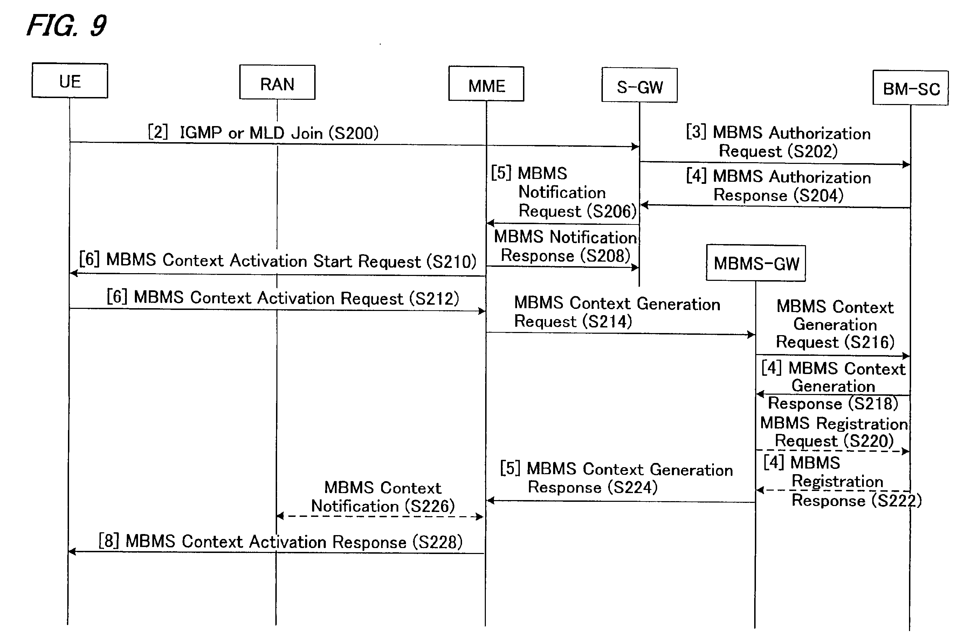

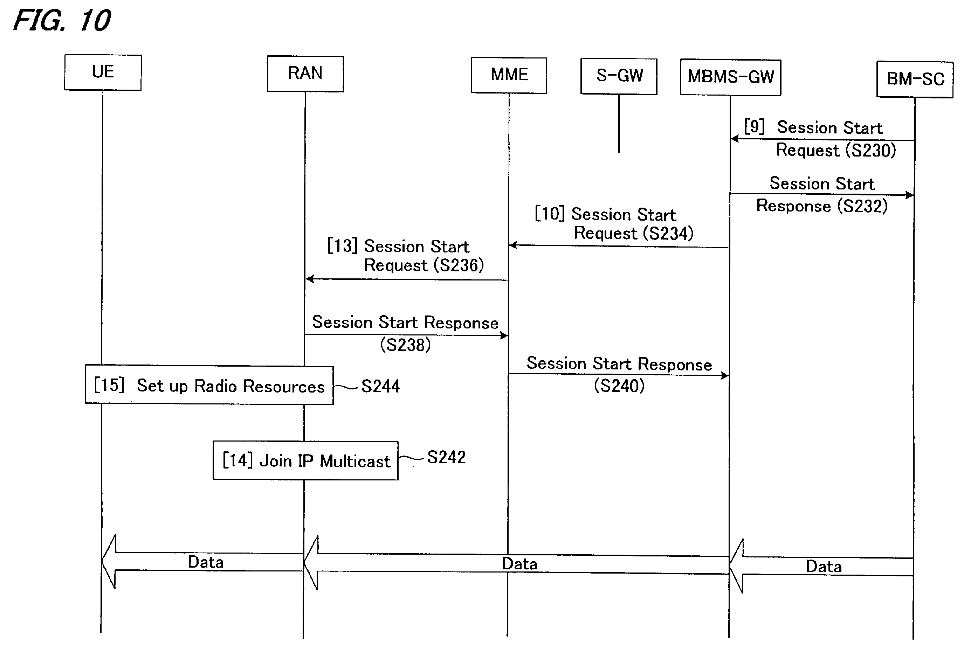

Next description will be made with reference to FIGS. 9 and 10, taking a case where the operation of the mobile communication system of the present embodiment described in FIG. 8 is applied to a sequence of the current MBMS specification. Here, the number (e.g., "2" added at the lead of S102 in FIG. 8) added to the operation of each sequence and process etc. in FIG. 8 corresponds to the number indicated inside the brackets in front of each sequence or process in FIGS. 9 and 10. Further, eNB 40 is expressed as RAN (radio access network) based on the description of the MBMS specification.

Here, the operation is not necessarily limited to the sequence and processing shown in FIGS. 9 and 10. Even if the sequence order and processes are modified depending on specification change, expansion, etc., or even if a sequence different from the specification is adopted by reason of system implementation, the operation is accepted as long as the information elements in FIG. 8 are applied to any one of messages and processing.

Specifically, FIGS. 9 and 10 show sequential procedures when the MBMS processing based on the current GPRS (General Packet Radio Service) is applied to EPS. However, the procedures can be still applied even if the sequential procedures, message names, message constitutions and processing are partly modified due to future specification expansion. Further, the EPS can operate on two schemes, the GPRS expansion scheme and the proxy mobile IP scheme. Though the description with FIGS. 9 and 10 is given in the case of the proxy mobile IP scheme, the procedures can also be applied to the GPRS expansion scheme.

### [1.3.3.1 Multicast Group Join Process]

Referring first to FIG. 9, the multicast group join procedure of a UE will be described. It is assumed herein that UE 50 has already completed the attach process or the location registration process to MME 30 and has already establishedacommunicationpath (defaultbearer) with between an S-GW, and the S-GW is set up as a default router of UE 50. Here, when the EPS operates based on the GPRS tunneling protocol, a P-GW (PDN-GW) is set up as a default router while the S-GW relays messages exchanged between UE 50 and the P-GW.

As UE 50 transmits an IGMP(IPv4) or MLD(IPv6) join message, the message reaches the S-GW as the default router, using the established communication path (S200). Inthiscase, UE 50 transmits this message together with the IP multicast address of the multicast service the UE wants to receive.

Since the P-GW works as the default router of the UE when the EPS operates based on the GPRS tunneling protocol, the P-GW receives the message first and then notifies the S-GW of the fact that an IGMP or MLD join message has been received from UE 50 and the IP multicast address the UE 50 wants to receive.

Next, the S-GW transmits a MBMS authorization request message to BM-SC 10 (S202).

As BM-SC 10 authorizes UE 50, BM-SC 10 notifies the S-GW of the access point name (APN) of MBMS-GW 20 for which a multicast bearer is set up, as a MBMS authorization response (S204). At this time, similarly to S106 of FIG. 8, if the TMGI of the multicast grope can be notified, the authorization response message including the TMGI is notified. If it cannot be notified, information corresponding to S204 is notified at S218 or S222 describedbelow. Here, the APN is an identifier that uniquely identifies the gateway (MBMS-GW 20) with BM-SC 10.

The S-GW transmits a MBMS notification request message included with the IP multicast address, the APN of MBMS-GW 20, the bearer ID and the like, to MME 30 (S206). At this time, similarly to S108 in FIG. 8, the TMGI of the multicast group is notified with the message. However, if the TMGI cannot be notified at this step, it is transmitted at S224 described below.

By the procedures heretofore, MME 30 is able to perform an operation of storing the information on IMSI, Cell ID and TMGI, corresponding to the operation at S112 in FIG. 8. When the TMGI is notified in after procedure, the operation corresponding to Step S112 is implemented after S224 described below.

Next, MME 30 transmits a MBMS notification response message to the S-GW (S208). Then, MME 30 transmits a MBMS context activation start request message to UE 50 (S210). UE 50 transmits a MBMS context activation request message to MME 30 (S212). At this point, it is preferable that the Cell ID of the cell in which the UE exists is notified from UE 50 to MME 30. However, if it is not notified, the Cell ID is updated based on the message corresponding to S110.

MME 30 identifies MBMS-GW 20 from the APN and transmits a MBMS context generation request message to MBMS-GW 20 (S214).

MBMS-GW20 transmits a MBMS context generation request message to BM-SC 10 (S216).

BM-SC 10 transmits a MBMS context generation response message to MBMS-GW 20 (S218). When no TMGI message has been transmitted at S204, BM-SC 10 notifies TMGI by including it in this message at S218.

When MBMS-GW 20 has no information on the setup and the like of the multicast bearer for MBMS context generation, MBMS-GW 20 further transmits a MBMS registration request message to BM-SC 10 (S220). When no TMGI has been assigned yet because the UE 50 is the first UE that has joined the multicast group or for some other reasons, BM-SC 10 assigns a TMGI to the multicast group at this stage and notifies the TMGI by including it in MBMS registration response message (S222) to MBMS-GW 20. Here, when MBMS-GW 20 has information on the setup of the multicast bearer, or when a TMGI has been assigned and notified already, these procedures of S220 and S222 can be omitted.

MBMS-GW 20 transmits a MBMS context generation response message to MME 30 (S224). If no TMGI has been notified to MME 30 up to this procedure, a TMGI is notified to MME 30 at this procedure.

Further, if the process corresponding to S112 in FIG. 8 has not been implemented up to this procedure, MME 30 stores UE management information on IMSI, TMGI and Cell ID after this procedure.

When eNB 40 has set up a radio bearer to UE 50, MME 30 notifies eNB 40 of the MBMS context as the information on the MBMS bearer setup (S226). MME 30 transmits a MBMS context activation response message to UE 50 (S228). Thus, the procedures of UE 50 to join the MBMS session are completed.

### [1.3.3.2 MBMS Session Initiating Process]

Next, the starting process of a MBMS session will be described with reference to FIG. 10.

BM-SC 10 transmits a session start request message including a TMGI to MBMS-GW 20 (S230 in FIG. 10). MBMS-GW 20 transmits a session start response message to BM-SC 10 (S232).

MBMS-GW 20 transmits a session start request message to MME 30 (S234). This message is a message corresponding to S118 in FIG. 8, and includes the TMGI of the multicast group and a dynamic service area constitution identifier. Then, after this procedure, MME 30 implements the procedures corresponding to S120 and S122 in FIG. 8 and selects an eNB 40.

MME 30 transmits a session start request message to the selected eNB 40 in the RAN (S236). Upon this, the message preferably includes information indicating that the multicast service constitutes a dynamic service area.

The eNB 40 in the RAN transmits a session start response message to MME 30 (S238). MME 30 transmits a session start response message to MBMS-GW 20 (S240).

The eNB 40 implements an IP multicast join process (S242). This corresponds to the process at S126 in FIG. 8. Further, eNB 40 implements a radio resource setup process (multicast bearer setup process) on UE 50 (S244). This corresponds to the process at S128 in FIG. 8.

Thus, a multicast bearer is set up by the procedures heretofore. When data is transmitted from BM-SC 10, the data reaches UE 50 along the set up multicast delivery path, via MBMS-GW 20 and RAN (eNB 40).

In this way, MME 30 does not select the destination cell of conventional multicast data, but sets up multicast delivery paths to all the eNBs 40 which the MME manages in the mobile communication system. However, according to the present embodiment, MME 30 dynamically selects a delivery designation eNB 40 depending on the cell in which UE 50 exists, the selected eNB 40 alone participates in the delivery path so that it is not necessary to set up waste delivery paths, thus improving efficiency of network resources and radio resources.

Similarly, conventionally it was necessary to transmit a session start request to all the eNBs 40 which MME 30 manages in the mobile communication system. However, according to the present embodiment, it is not necessary to distribute the session start request message to all eNBs 40, it is hence possible to suppress signaling traffic to a low level.

Further, according to the present embodiment, it is possible for MME 30 to determine whether multicast data is distributed to the fixed MBMS service area as a unit, or whether the destination cell of multicast data is dynamically selected (that is, the service area is dynamically constituted), hence the present embodiment can be configured so as to coexist with the method of MBMS multicast service in which the multicast data is distributed to the conventional MBMS service area, and it is possible to flexibly select a preferable method, depending on the service content, content provider's intentions, and mobile communication operator's policy and the like.

Further, in the present embodiment, information on UE 50 managed by BM-SC 10 and MME 30 is information that is notified to BM-SC 10 and MME 30 from UE 50 in the phase of attach or location registration and the phase of joining the multicast grope, as in the past, hence UE 50 can connect without the necessity to specially give additional notification of new information etc. , and without the necessity of modifying the conventional configuration as long as the UE 50 is able to receive multicast services.

### [2. The Second Embodiment]

Next, the second embodiment will be described.

### [2.1 System Configuration]

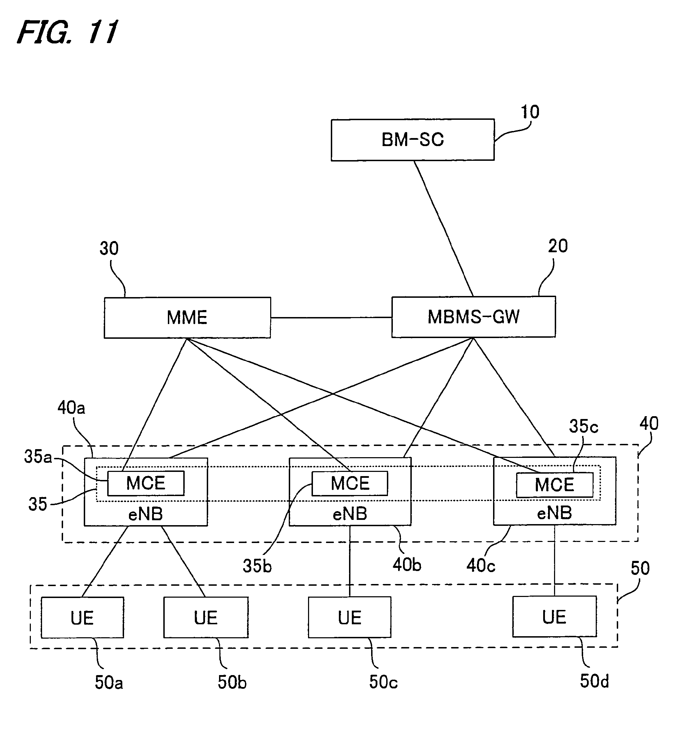

FIG. 11 is a diagram illustrating a system configuration of the second embodiment of the present invention. In the configuration of the present embodiment, eNB 40 (eNB 40a, eNB 40b, eNB 40c) includes a MCE (Multi-cell/multicast Coordination Entity) 35 (MCE 35a, MCE 35b, MCE 35c) as a functional unit for coordinating radio resources between a plurality of eNBs when performing multicast. This MCE 35 enables eNBs 40 to set up a multicast bearer using the same radio resources in each cell.

In this configuration, MME 30 is connected to eNBs 40, but the entity to be controlled is MCE 35. Accordingly, the interface to be used is different from that in the first embodiment. Specifically, in the first embodiment, for example S1-MME interface defined in EPS is used between MME 30 and eNB 40, whereas in the second embodiment M3 interface is used between MME 30 and MCE 35. Since other nodes are the same as those in the first embodiment, description is omitted.

### [2.2 Processing Flow]

Next, the processing flow in the present embodiment will be described.

### [2.2.1 MME Processing Flow]

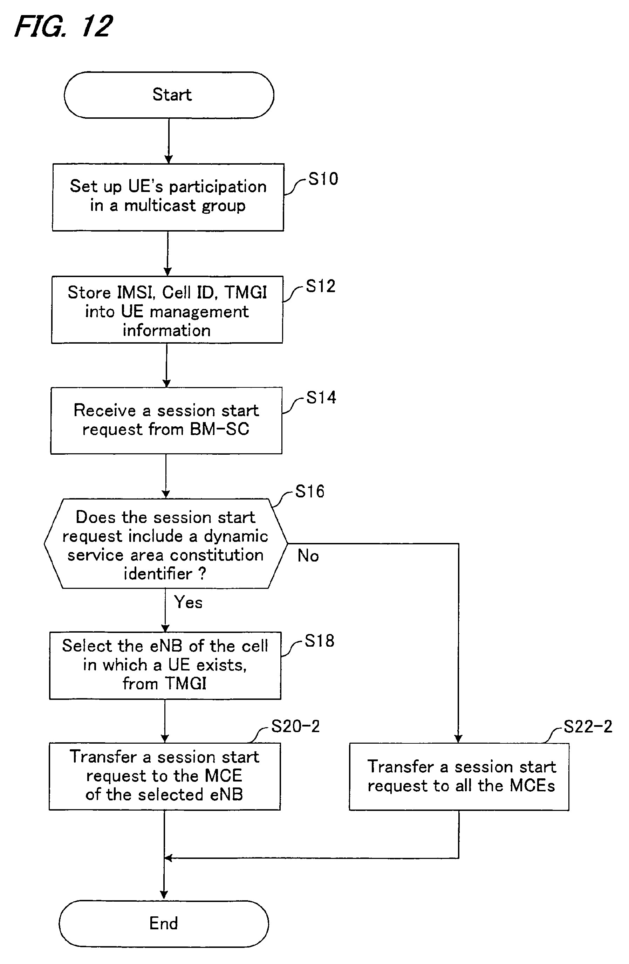

Referring to FIG. 12, the processing flow (operation) of MME 30 in the present embodiment will be described. The same processes as the steps of the first embodiment described with FIG. 7 are allotted with the same numbers in FIG. 7. The present embodiment differs from the first embodiment in that a session start request message is transmitted to MCE 35 of eNB 40 at Step S20-2 and S22-2.

Also in the second embodiment, since the session start request message is transmitted to only the MCE 35 of eNB 40 selected by MME 30 in the processing from Step S18 to S20-2, only the eNB 40 in the cell in which UE 50 exists performs an IPmulticast join process (a process of joining the multicast trees). As a result, the necessary eNB 40 alone participates in the multicast delivery paths.

Further, when it has been determined at Step S16 that no dynamic service area is constituted, from non-inclusion of a dynamic service area constitution identifier, a session start request is transmitted to MCEs 35 of all the eNBs 40 under the umbrella of MME 30 at Step S22-2 as a normal MBMS processing.

### [2.2.2 Flow of the Entire System]

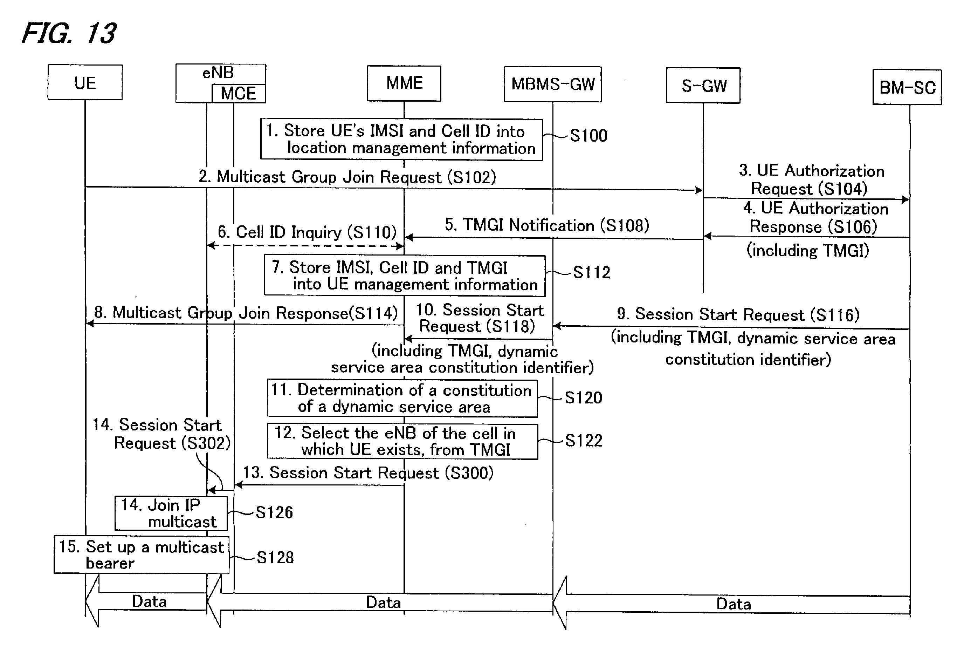

Subsequently, the flow of the entire mobile communication system in the second embodiment will be described with reference to FIG. 13. FIG. 13 is a diagram illustrating an operational example of the entire mobile communication system of the present embodiment. The difference from the processing described with FIG. 8 is in that at S300 instead of S124, MME 30 transmits a session start request to MCE 35 of the selected eNB 40. Further, MCE 35 further transmits a session start request to eNB 40 at S302.

### [2.2.3 Flow of the Entire System (MBMS Specifications)

The present embodiment can be also applied to the processing in the MBMS specifications described with FIGS. 9 and 10. The difference from the first embodiment resides in that the session start request message at S236 is received by MCE 35 inside eNB 40 in the RAN and that radio resource setup at S244 is implemented by MCE 35 controlling eNB 40.

### [3. The Third Embodiment]

Next, the third embodiment will be described.

### [3.1 System Configuration]

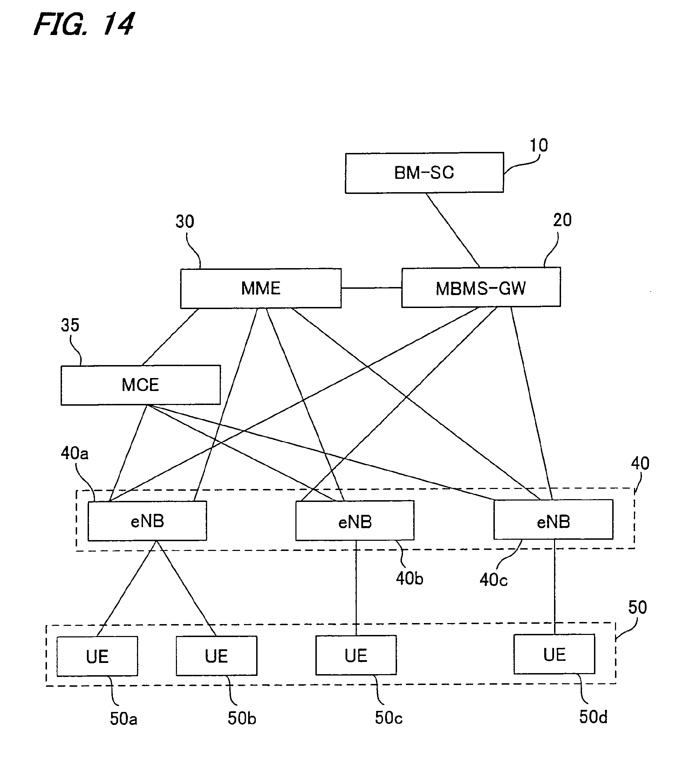

FIG. 14 is a diagram for illustrating the system configuration of the third embodiment. In the configuration of the present embodiment, MCE 35 is configured independently fromeNBs 40 (eNB 40a, eNB 40b, eNB 40c) of the second embodiment. This configuration enables MCE 35 to function as a superior node of eNBs 40 and perform efficient coordination of radio resources.

In this case, specifically the interface between MCE 35 and eNB 40 is called M2 interface. MCE 35 functions as the direct controller of eNBs 40 with respect to radio resource setup, similarly to the second embodiment. However, MCE 35 and eNB 40 are related in a one-to-one correspondence manner in the second embodiment, whereas MCE 35 and eNBs 40 are associated in a one-to-many correspondence manner in the present embodiment. Accordingly, MME 30 does not need to individually transmit a control message to each eNB 40.

Instead, the MME cannot directly control eNB 40 to be included in the dynamic service area, hence the MME controls MCE 35 so that the eNB performs a multicast join process. Accordingly, the interface is different from that of the first and second embodiments and the processing steps and the content of control messages become different. Specific description will be given below. Since the entity that directly controls eNB 40 with respect to resource setup for multicast is MCE 35, MME 30 plays a role to support MCE 35 to control eNBs 40.

### [3.2 Processing Flow]

Next, the processing flow in the present embodiment will be described.

### [3.2.1 MME Processing Flow]

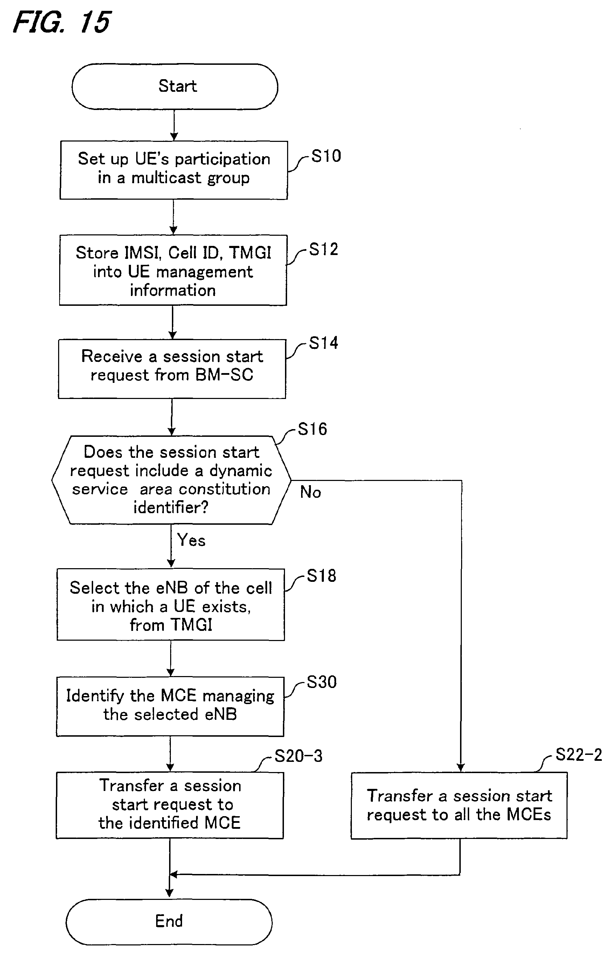

Referring to FIG. 15, the processing flow (operation) of MME 30 in the present embodiment will be described. The same procedures as the steps of the first embodiment described with FIG. 7 and of the second embodiment described with FIG. 12 are allotted with the same numbers.

The difference from the second embodiment is in that a step S30 is added. This step is not needed in the second embodiment described above because MCE 35 can be identified simultaneously at the time when eNB 40 is selected. However, this step is needed in the present embodiment since eNB 40 and MCE 35 are disposed in a functionally separated manner. That is, MME 30 needs to select eNB 40 and then also needs to identify the MCE 35 that is the superior node of the selected eNB. Therefore, MME 30 should also store the address, identifier, etc. of MCE 35 that control the eNB 40, together with, for example eNB information 342 managed in storage 340 of FIG. 3.

Further, at Step S20-3 a session start request message is transmitted, not to eNB 40 but to the MCE 35 identified at Step S30. At this time, the session start request message to be transmitted should include the list of the address and/or identifier of the selected eNB 40 in order for MCE 35 to be able to identify the eNB which was selected at Step S18.

In the third embodiment, since MME 30 transmits a session start request to the identified MCE 35 only at the process of Step S20-3, it is possible to further reduce signaling traffic. Further, though not illustrated, MCE 35 can allow the selected eNB 40 alone to implement an IPmulticast join process (process of joining multicast trees) based on the selected result of eNB 40 described above. As a result, only the necessary eNB 40 participates in the delivery paths, so that the same advantages as in the first and second embodiments can be obtained.

### [3.2.2 Flow of Entire System]

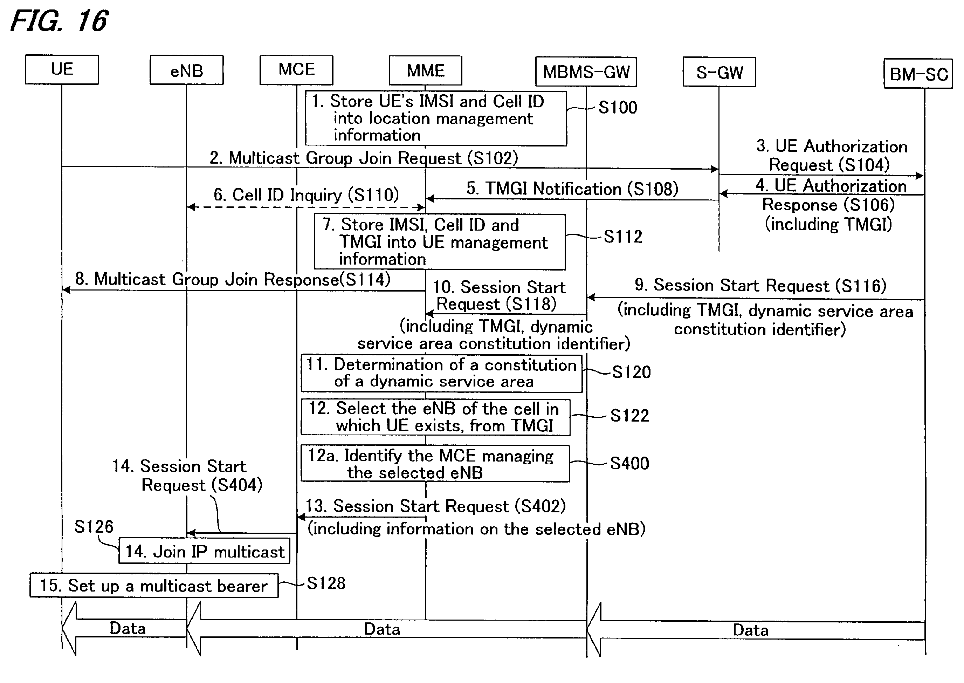

Subsequently, the flowoftheentiremobile communication system in the third embodiment will be described with reference to FIG. 16. FIG. 16 is a diagram illustrating an operational example of the entire mobile communication system of the present embodiment, and the same procedures as the procedures in FIGS. 8 and 13 are allotted with the same numbers. The difference from the processing described with FIGS. 8 and 13 is in that a process of further identifying MCE 35 of the eNB 40 selected by MME 30 is added as Step S400.

Further, at the step of transmitting a session start request to MCE 35 (S402), MME 30 transmits the request included with the address, identifier and other information of the selected eNB 40. Furthermore, MCE 35 transmits a session start request to eNB 40 (S404).

### [3.2.3 Flow of Entire System (MBMS Specifications)]

The present embodiment can be also applied to the processing in the MBMS specifications described with FIGS. 9 and 10. The differences from the first and second embodiments are in that an operation of identifying MCE35 in MME 30 (corresponding to S400 in FIG. 16) is added after S234, in that MME 30 transmits a session start request included with the address, identifier, etc. of the selected eNB 40 to the RAN at S236 (corresponding to S402 in FIG. 16), in that the session start request is received by MCE 35 in the RAN and in that MCE 35 controls eNB 40 to implement the radio resource setup at S244 (corresponding to S404 in FIG. 16).

Thus, MME 30 does not select the destination cell of conventional multicast data but sets up multicast delivery paths to all the eNBs 40 (eNBs included in the MBMS service area) as the lower nodes of MME 30. However, according to each of the above-described embodiments, MME 30 selects a destination eNB 40 in a pinpoint manner in accordance with the cell in which the UE 50 as the receiving terminal exists, hence the selected eNB 40 alone participates in the delivery paths. Accordingly, it is not necessary to set up waste delivery paths, hence improving efficiency of network resources and radio resources.

Similarly, conventionally it was necessary to transmit a session start request to all the eNBs 40 under MME 30. However, it is not necessary to distribute the session start request message to all eNBs, it is hence possible to suppress signaling traffic to a low level.

Further, since MME 30 of the present embodiment can determine whether or not a dynamic service area should be constituted, the present embodiment can be configured so as to coexist with the method of MBMS multicast services which is used to distribute to the conventional fixed MBMS service area, and it is possible to flexibly select a preferable method, depending on multicast service characteristics.

### [4. Variational Examples]

As the embodiments of this invention have been described in detail with reference to the drawings, the specific configuration should not be limited to the embodiments. Designs and others that do not depart from the gist of this invention should also be included in the scope of claims.

The program to be operated in each apparatus in each of the embodiments is a program (program that makes a computer function) for controlling a CPU or the like so as to realize the functions of the above-described embodiment modes. The information to be handed in these apparatus is temporarily stored in a temporary storage device (e.g., RAM) at the time of processing, then is stored into various storage devices such as ROM, HDD and is read out, modified and written in by the CPU, as necessary.

Herein, the recording medium for storing program may be any of semiconductor mediums (e.g., ROM, non-volatile memory card, etc.), optical recording mediums/magneto optical recording mediums (e.g., DVD (Digital Versatile Disc), MO (Magneto Optical Disc), MD (Mini Disc), CD (Compact Disc), BD and the like), magnetic recording mediums (e.g. , magnetic tape, flexible disc, etc.), and the like. Further, the functions of the above-described embodiment modes are realized by executing the loaded program, but the functions of the present invention may also be realized in accordance with the instructions of the program by processing in cooperation with an operating system, another application program or the like.

To put the product on the market, the program may be stored on a removable recording medium and distributed, or may be transferred to a server computer connected to a network such as the Internet or the like. In this case, the storage device of the server computer is of course included in the present invention.

Further, the whole or part of each apparatus in the above-described embodiments may be typically realized by an LSI (Large Scale Integration) as an integrated circuit. Individual functional blocks of each apparatus may be given in the form of separate chips, or the whole or part of the blocks may be integrated into a chip. The circuit integration may be realized in the form of a dedicated circuit or general purpose processor, not limited to LSI. It goes without saying that if a technology of circuit integration replacing LSI technologies appears with the progress of semiconductor technologies, the integrated circuit based on the technology can be used.

Moreover, description of the above-described embodiments is given taking an example in which the service area is dynamically constituted in a limited range, by only aiming at the cell in which UE 50 exists. However, it is necessary to consider the possibility that the service area that has been once dynamically constituted changes, such as when a UE 50 that exists in another cell, newly joins the multicast group after start of distribution of multicast data, or when a UE that has joined the multicast group quits halfway through the multicast session so that there is no longer any need to transmit to the cell. In this case, UE 50 transmits a join request to the multicast group or a release request, from the cell in which the UE exists to MME 30. At this point of time, MME 30 updates the content of UEmanagement information 346 and changes the constitution of the dynamic service area and the delivery paths on all such occasions.

There is also a need to consider movement of UE 50 from cell to cell, it is hence desirable that MME 30 is adapted to make eNB 40 check up the existence of UE 50 during the multicast session. As a method of checking up the existence of UE 50, for example, MME 30 may periodically inquire of eNB 40, or eNB 40 may notify MME 30 at such a time as when eNB 40 has received a measurement report signal of radio wave strength from UE 50.

In this way, additional provision of a means for enabling MME 30 to inquire of eNB 40 or a means for enabling eNB 40 to notify MME 30, makes it possible for MME 30 to follow the movement of UE 50 and constantly update the information on the cell in which UE exists, and flexibly deal with the change of the dynamic service area constitution.

Description herein has been described by taking an example of forming a dynamic service area on a small scale in the range of the MBMS service area. However, according to each embodiment of the present invention, it is easy to constitute a dynamic service area beyond the range the fixed MBMS service area can cover, or constitute a dynamic service area at a location bridging multiple MBMS service areas. Further, when eNB 40 does not support multicast distribution, uni-cast transmission (data is transmitted individually to each of UEs 50 which exists in a serving area) may be used only for the radio bearer between UE 50 and eNB 40.

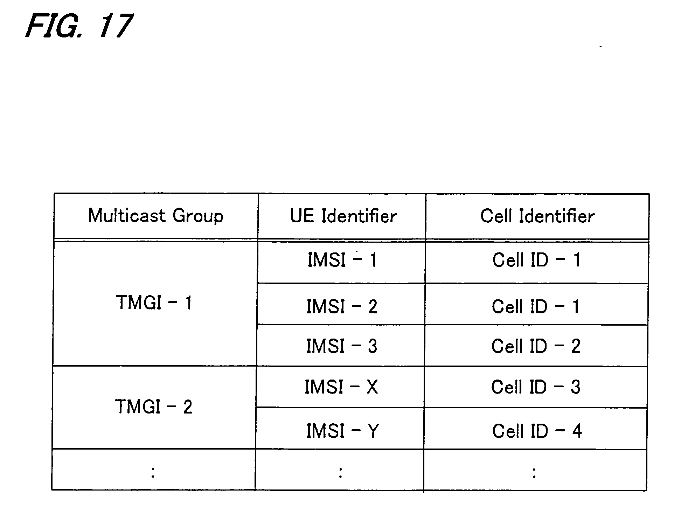

Further, UE management information 346 may be given in such a format that can be managed together with TMGI. Alternatively, separately from UE management information 346, a table that associates a UE's identifier with the identifier of its servicing cell for each TMGI as shown in FIG. 17 may be used. Further, this UE management information 346 can be updated at any time when a new UE 50 joins the multicast group from another cell during service or when UE 50 deactivates the service and leaves the multicast group.

### Description of Reference Numerals

- 1: mobile communication system
10 BM-SC
100 controller
110 transceiver
120 service area selector
130 session controller
140 storage
150 service announcement functional unit
160 multicast group membership manager
170 data delivery proxy unit
- 20: MBMS-GW
- 30: MME
300 controller
310 transceiver
320 UE location manager
330 attach/location register receiver
340 storage
342 eNB information
344 location management information
346 UE management information
350 multicast control signal receiver
360 multicast bearer setup indication transmitter
370 dynamic service area constitution determiner
380 multicast UE manager
- 40, 40a, 40b, 40c: eNB
- 50, 50a, 50b, 50c, 50d: UE

## Claims

1. A mobility management apparatus for managing mobile station apparatuses, connected to a mobile communication system in which a service area is constituted of a plurality of cells each disposing a base station, and which offers a multicast service to a mobile station apparatus existing in the service area, by transmitting multicast data from a multicast service delivering apparatus to the base stations in the service area, comprising:
a terminal management means that manages the mobile station apparatus in association with a base station apparatus under which the mobile station apparatus exists;
a start request receiving means that receives a session initiation request for multicast, from the multicast service delivering apparatus,
a service area determining means which, when the session initiation request includes a dynamic service area constitution identifier, determines, based on the terminal management means, a cell disposing a base station apparatus under which the mobile station apparatus exists, as a dynamic service area; and
a first session start request transmitting means which transmits a session start request to the base station apparatus included in the service area determined by the service area determining means.

2. A mobility management apparatus further comprising:
a join request receiving means that receives a join request to a multicast group, from the mobile station apparatus, wherein
the terminal management means manages an identifier of the multicast group, the mobile station apparatus and the base station apparatus under which the mobile station apparatus exists, in an associated manner; and
the service area determining means, when the session initiation request includes the dynamic service area constitution identifier, determines, based on the terminal management means, the cell in which the base station apparatus associated with the multicast group corresponding to the session initiation request is disposed, as the dynamic service area.

3. The mobility management apparatus according to Claim 1 or 2, wherein a base station control apparatus for managing the base station apparatus and performing control between base station apparatuses is further connected to the mobile communication system, and,
the first session start request transmitting means transmits a session start request to the base station control apparatus that manages the base station apparatus included in the service area that is determined by the service area determining means, by including information on the base station apparatus in the session start request.

4. A multicast service delivering apparatus connected to a mobile communication system, in which a service area is constituted of a plurality of cells each disposing a base station, and which offers a multicast service to a mobile station apparatus existing in the service area, by transmitting multicast data from a multicast service delivering apparatus to the base stations in the service area, comprising:
a second session start request transmitting means which, at initiation of a multicast session, transmits a session start request to a mobility management apparatus connected to manage the mobile station apparatus, wherein
the second session start request transmitting means includes a dynamic service area constitution identifier in the session start request when the mobility management apparatus is wanted to cause a base station apparatus disposed in a cell in which the mobile station exists, to dynamically constitute a service area.

5. A mobile communication system, in which a service area is constituted of a plurality of cells each disposing a base station, and which offers a multicast service to a mobile station apparatus existing in the service area, by transmitting multicast data from a multicast service delivering apparatus to the base stations in the service area, wherein
separately from the service area, a cell disposing a base station under which the mobile station apparatus exists is made to dynamically form a service area.

6. The mobile communication system according to Claim 5, further including a mobility management apparatus managing mobile station apparatuses,
wherein the mobility management apparatus manages the mobile station apparatus and the base station apparatus under which the mobile station apparatus exists, and selects the base station apparatus under which the mobile station apparatus exists and sets up a communication path to the base station apparatus when receiving an indication to dynamically constitute a service area, from the multicast service delivering apparatus.

7. A mobile communication system, in which a service area is constituted of a plurality of cells each disposing a base station, and which offers a multicast service to a mobile station apparatus existing in the service area, by transmitting multicast data from a multicast service delivering apparatus to the base stations in the service area and is connected to a mobility management apparatus connected to manage the mobile station apparatus, wherein
the mobility management apparatus comprising:
a terminal management means that manages the mobile station apparatus in association with a base station apparatus under which the mobile station apparatus exists;
an initiation request receiving means that receives a session initiation request for multicast, from the multicast service delivering apparatus;
a service area determining means which, when the session initiation request includes a dynamic service area constitution identifier, determines, based on the terminal management means, the cell disposing a base station apparatus under which the mobile station apparatus exists, as a dynamic service area; and
a first session start request transmitting means which transmits a session start request to the base station apparatuses included in the service area determined by the service area determining means.

8. A mobile station apparatus connected to a mobile communication system according to any one of Claims 5 to 7, comprising:
a multicast bearer setup means that sets up a multicast bearer with the base station apparatus; and
a multicast data receiving means that receives multicast data from the multicast service delivering apparatus, through the multicast bearer.

9. A mobile communication method in a mobile communication system, in which a service area is constituted of a plurality of cells each disposing a base station, and which offers multicast services to a mobile station apparatus existing in the service area, by transmitting multicast data from a multicast service delivering apparatus to the base stations in the service area, wherein
a cell disposing a base station in which the mobile station apparatus exists constitutes a service area dynamically.

10. A mobile communication method in a mobile communication system, in which a service area is constituted of a plurality of cells each disposing a base station, and which offers multicast services to a mobile station apparatus existing in the service area, by transmitting multicast data from a multicast service delivering apparatus to the base stations in the service area, the mobile communication method comprising:
a step of managing the mobile station apparatus in association with a base station apparatus under which the mobile station apparatus exists;
a step of receiving a session start request for multicast, from the multicast service delivering apparatus;
a step of determining, based on the terminal management means, a cell disposing a base station apparatus under which the mobile station apparatus exists, as a dynamic service area when the session start request includes a dynamic service area constitution identifier; and
a step of transmitting a session start request to the base station apparatuses included in the service area determined.
